# EUROPEAN PATENT SPECIFICATION

(11) **EP 0 740 258 B1**
(45) Date of publication and mention of the grant of the patent: **28.05.2003**
(21) Application number: 96106645.3
(22) Date of filing: 26.04.1996
(51) Int. Cl.: G06F 17/30

(54) **Data management system**
Datenverwaltungssystem
Système de gestion de données

(30) Priority: 28.04.1995 JP 12751895
(43) Date of publication of application: 30.10.1996
(73) Proprietor: FUJI XEROX CO., LTD., Minato-ku Tokyo 107 (JP)
(72) Inventor: Suzuki, Toshikatsu, c/o Fuji Xerox Co., Ltd., Ashigarakami-gun, Kanagawa (JP); Matsunaga, Yoshifumi, c/o Fuji Xerox Co., Ltd., Ashigarakami-gun, Kanagawa (JP); Taniguchi,Sinichiro, c/o Fuji Xerox Co., Ltd., Ashigarakami-gun, Kanagawa (JP); Ishida, Eiji, c/o Fuji Xerox Co., Ltd., Yokohama-shi, Kanagawa (JP); Ishima, Hiroyuki, c/o Fuji Xerox Co., Ltd., Ashigarakami-gun, Kanagawa (JP)
(74) Representative: Hoffmann, Eckart, Dipl.-Ing.

(56) References cited:
- EP-A- 0 342 964
- US-A- 4 879 648

## Description

The invention relates to a data management system for storing, retrieving and utilizing information (data) on computers. The data management system stores data with a point mechanism for activating a specified processing corresponding to the stored data under the various conditions or on the multi platforms, without increasing difficulty of management, retrieves stored information and immediately utilize or recover them. This system can store information of many kinds of media form, as a result, can be used in many kinds of utility form.

In a conventional devices, there are two types of the systems to store and retrieve data, as follows:
(1) Each data unit is made of a set of smaller data components, and
(2) Each data unit is identified, but the data structure of the contents thereof is not concerned.

The system configuration methods for these two cases are different. A database system for case (1), and the filing system for case (2).

In a database system, each data unit is structured as a set of components. For example, a "record" is a set of "field" in the relational database, and a "object" is a set of "instance variable" in the object-oriented database. Both of these structures of the databases are ruled by a "schema" or a "class definition", respectively. Because data units are stored in the database based on those rules, it is possible to retrieve a data unit from the database from various commands.

For example, in the relational database of personnel information, one record is formed for each person. Each record includes a plurality of fields, such as "name", "gender", "date of birth", "address", "member's number" or "department of belonging". Thus, a retrieval of the records in accordance with conditions, such as "a women born in 1960" or "a person belonging to the YY department living in XX city" is facilitated. It is difficult, though, to add a new information to the record data that does not match the predetermined schema of this database.

Japanese Laid-Open Patent Publication Hei.1-194026 is related to addition of a personal memo information to a data in a database. Japanese Laid-Open Patent Publication Hei.3-160536 discloses an apparatus that has storage to store a processing corresponding to data in a database. When the data is accessed, a processing, corresponding to it, is activated and processing of the data; if the processing, is registered in the storage.

But these techniques cannot register external information existed outside of the database, as the information related to the data unit in the database.

On the other hand, the filing system disclosed in the Hei.3-160536 stores information as a file, and can retrieve the file in accordance with conditions such as "the name of the file begins with ZZ." In this case, the content of the retrieved file can vary. For this reason, the file system is configurated so as to identify the file types corresponding to some file formats, to display the content of the file.

As a result, this filing system can display any kind of file, for example, documents edited by a word processor, image data scanned by a scanner, or data of a spread sheet, if it is recognized. However, the filing system does not interpret data in accordance with the fixed schema in the database. The content of the file is a desirable feature of the filing system. Each filing system has its own availability for treating the varying file contents and for displaying or recovering the file contents.

For example, Magellan, the text database produced by the Lotus Development Co. Ltd., provides the similar function to the database, which can display data files of some kinds of applications without any user's consciousness for the format of the data file. But in this text database, because the way of transformation is fixed, user cannot edit the corresponding relationship.

The database system does not provide a function to freely edit the corresponding relationship between the data stored in database and external data and a processing for calling and executing the external data, both of which exist outside of the database. In other words, the data structure defined by a database schema cannot change. Other various external files and programs to process the files cannot relate to the database.

On the other hand, since the filing system uniformly determines the program on the system side in accordance with the type or format of the data file, a user cannot determine his original corresponding relationship to the specified file. Addition of new corresponding relationship is only permitted between a specified file type and a program or to change the corresponding relationship.

An object of the invention is to resolve the above described problems and to provide a data management system which enables a user to flexibly make corresponding relationships between data stored in an existing database, and a data file and a program for processing the data file. Both the data file and the program can exist outside of the existing database.

Another object of this invention is to simplify the configuration of the data management system by allowing a storing mechanism and retrieval mechanism for corresponding relationships to be shared with those for the data in the existing database.

Further, another object of this invention is to provide a data management system that can execute an appropriate program to process an external data file, which may be related to data stored in the existing database on the different platforms.

These objects are achieved by a data management system and method as claimed in claims 1 and 10, respectively, and preferred embodiments subject-matter of the dependent claims.

Additional aspects and advantages of the invention will be set forth in the description that follows. The aspects and advantages of the invention may be realized and attained by means of the instrumentalities and combinations particularly pointed out in the appended claims.
Fig. 1 is a block diagram illustrating main sections of a data management system according to a first aspect of the present invention;
Fig. 2 illustrates an example of a data structure of a database according to the invention;
Fig. 3 is an example of a data structure of an object data table referred by an external object reference management section according to the first aspect of the invention;
Fig. 4 is an example of a window for a data retrieval processing displayed on a screen by a user interface section;
Fig. 5 is a flowchart illustrative of a data retrieval processing according to the first aspect of the invention;
Fig. 6 is a flowchart illustrative of an external object activation processing according to the first aspect of the invention;
Fig. 7 is an example showing a display condition after execution of an image display processing related to a retrieved data unit from a database;
Fig. 8 is a flowchart illustrative of a registration processing of corresponding relationships;
Fig. 9 is an example of an input window for registration processing;
Fig. 10 is a block diagram illustrative of main sections for a data management system according to a second aspect of the invention;
Fig. 11 is an example of a data structure of an external object management database according to the second aspect of the invention;
Fig. 12 is a flowchart illustrative of data retrieval processing according to the second aspect of the invention;
Fig. 13 is a block diagram illustrative of main sections of the data management system according to a third aspect of the present invention;
Fig. 14 is an example of a data structure of an external object management database according to the third aspect of the invention;
Fig. 15 is an example of a program alternate table;
Fig. 16 is a flowchart illustrative of an external object activation processing including an alternate program for the third aspect of the invention;

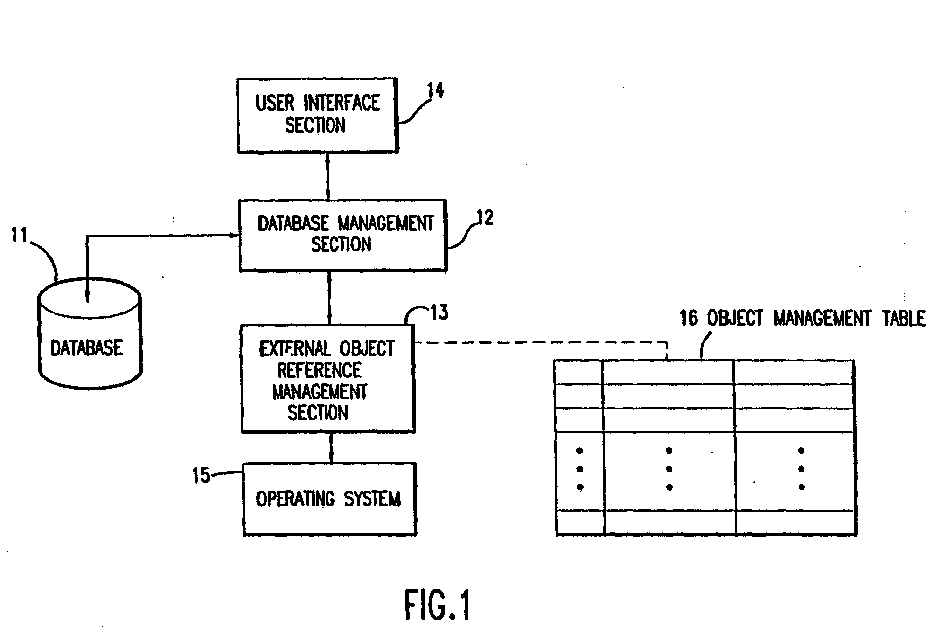

In the following, the aspects of this invention are described referring to the drawings. Fig. 1 illustrates a block diagram of main sections of a database management system according to the first aspect of the invention. The database system comprises a database 11, a database management section 12, an external object reference management section 13, a user interface section 14, an operating system 15 and an object management table 16. Although not illustrated in Fig. 1, data files and programs also stored in the filing system, outside of the database 11. Each individual data file and program is referred as an external object, if there is not a need to specify it.

A database 11 usually includes a plurality of data units, and is stored in a secondary memory of an computer system. A database management section 12 executes processing for the database, such as retrieval, editing and maintenance. A user interface section 14 controls an interaction between the data management system and a user of this system.

The object management table 16 stores external relationship that relates the data unit in the database 11 and the data file and the program to process the data file. For example, the data unit is stored in a table form so that a file name and a program name corresponds to an identifier that identifies the data unit in the database.

The external object reference management section 13 references the object management table 16 that stores, as described above, the pair of the file names and the program name for processing corresponding to one of the data units stored in the database 11. Further, the object management table 16 retrieves the file name and the program name, in accordance with the data unit retrieved by the database management section 12. The file name and the program name, which are retrieved by the external object reference management section 13, are transferred to the operating system 15. The operating system 15 controls processors, i/o devices, memories and other elements of the computer system, in accordance with the file name and the program name received from the external object reference management section 13. Thus, processing of the data file identified by the file name by the program identified by the program name, such as to display the contents of the data file can be performed.

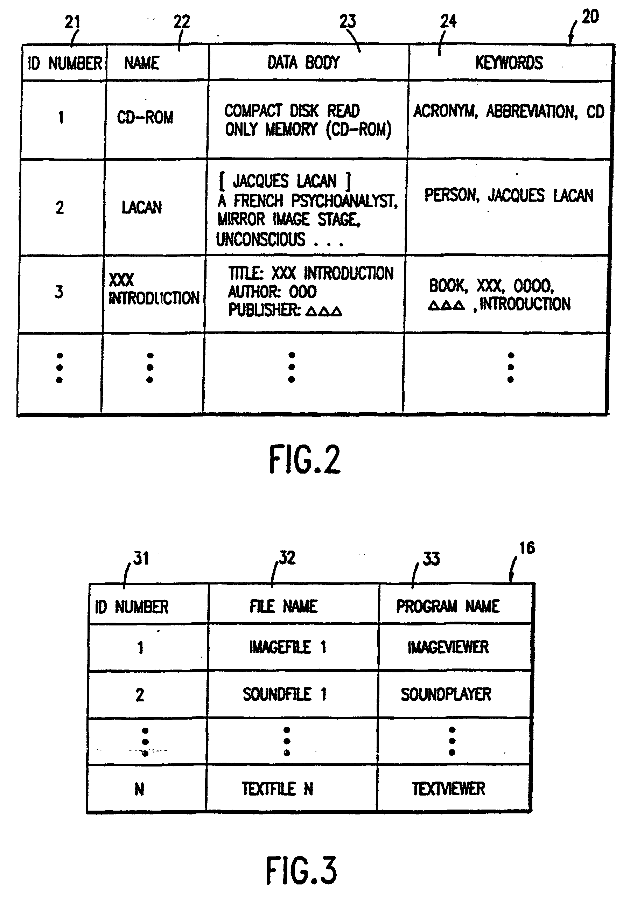

Fig. 2 illustrates a data structure of the database 11. The data structure of the database 11 is in a table form, as shown in Fig. 2 and is merely an example. A row in the table 20 represents a data unit stored in the database. The data unit comprises an ID number field 21, a name field 22, a data body field 23 and a keywords field 24. An ID number stored in ID number field is assigned to each data unit. The ID number is used to uniquely identify each of the data unit in the database. The system automatically assigns a unique ID number to each data unit.

The name field 22 stores a name for the data unit. The user, who registers the data unit, can freely give a name to the data unit. The data body field stores a data body, which is a main component of the data unit. A keywords field 24 stores keywords, for retrieving the data unit. As shown in Fig. 2, keywords are listed and separated by comma. A user can retrieve a desired data by inputting keywords, and instructing retrieval to start through the user interface section 14.

It is possible to include other information in the data unit. For example, the data unit can include a date or time, which the data unit is registered. The keywords in the keywords field 24 are only required for a keyword retrieval of the database. In other words, a keywords field 24 is not required, if other retrieval methods, such as full text retrieval, are used. It is also possible to exclude the name field, and to include the name of data unit in part of the data body field.

Further, instead of automatic assignment of the ID number for each data unit for identification it, it is possible to identify the data unit by the name of the data unit. In 'this case, an automatic check mechanism is required to check the uniqueness of the name in the system.

Fig. 3 illustrates a data structure for the object management table 16 referred by the external object reference management section 13. As shown in Fig. 3, the object management table 16 comprises an ID number field 31, a file name field 32 and a program name field 33. The object management table 16 can be in form table, and a row of the table represents an entry storing external relationship, which corresponds to a relationship between the data unit in the database 11 and external objects. In other words, the entry is a set of three data, i.e., the data stored in the ID number field 31, in the file name field 32 and in the program name field 33.

The ID number field 31 stores an ID number assigned to one of the data units, stored in the database 11. The entry of the object management table 16 is related to one of the data units stored in the database by the ID number. The external reference management section 13 retrieves a file name from the file name field 32, and a program name from the program name field 33 for the entry, based on the ID number in the ID number field where both are related to the data unit having the same ID number.

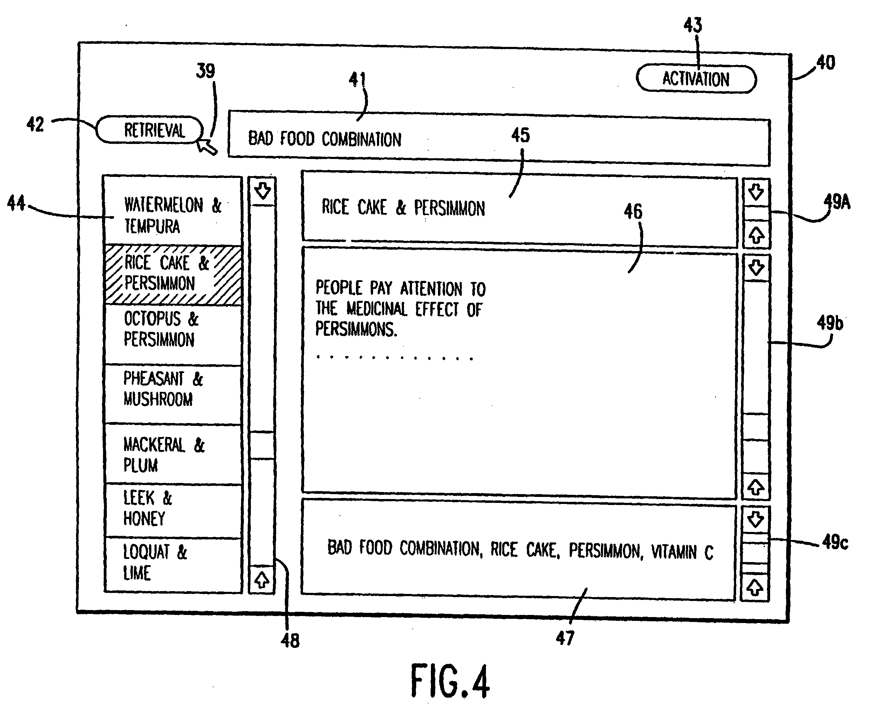

Fig. 4 illustrates an example of a view of a window for retrieval display on a screen controlled by the user interface section 14. Fig. 4 illustrates a mouse pointer 39 and window 40.

The mouse pointer 39 is preferably a cursor displayed on the screen, whose position is controlled by a mouse. A user can input an instruction to the system by positioning the cursor on a button displayed on the screen and clicking the mouse.

The window 40 is graphic image displayed on the screen for interaction between the user and the system and is controlled by the user interface section 14. The window 40 comprises a search key input area 41, a retrieval instruction button 42, a program activation instruction button 43, a retrieval result displaying area 44, a name displaying area 45, a data body displaying area 46, a keywords displaying area 47, and scroll bars 48, 49a, 49b and 49c.

The search key input area 41 is an area for inputting a character string as the search key. The retrieval instruction button 42 is a button for instructing the start of retrieval processing. The program activation instruction button 43 is a button for instructing activation of the program related to the data unit in the database retrieved by retrieval processing as a retrieval result. The retrieval result displaying area 44 is an area for displaying a name list of the retrieved data units. A user can select one of the data unit, whose name is listed.

The name displaying area 45 is an area for displaying the name of the data unit which is selected from the name list displayed in the retrieval result displaying area 44. The data body displaying area 46 is an area for displaying the data body of the selected data unit. The keywords displaying area 47 is an area for displaying the keywords corresponding to the selected data unit. Scroll bars are provided for when these displaying areas are too small to display all the data that is to be displayed in each displaying area.

Scroll bar 48 is also provided for when all of the retrieved data unit cannot be displayed in the retrieval result displaying area 44. The user can confirm all the retrieved data by scrolling up or down in the retrieval result displaying area 44. In the same manner, the scroll bar 49a is for scrolling the name displaying area 45, scroll bar 49b is for scrolling the data body displaying area 46 and scroll bar 49c is scrolling the keywords displaying area 47. For simplicity, Fig. 4 excludes conventional buttons and menus, which are not required for the explanation of the invention.

In the example shown in Fig. 4, when a user inputs a search key, for example, "bad food combination" and clicks the search instruction button 42 by the mouse pointer 39, a database retrieval processing starts. As a result of the database retrieval processing, data units each having keyword "bad food combination" in the keywords field 20 are retrieved. A list of the names of retrieved data units is then displayed in the retrieval result displaying area 44. For instance, when the database is a dictionary, the name of the data unit is called as a head word. When the retrieved data units for display in the retrieval result displaying area 44 are too large and overflow, a user scrolls the display of the retrieval result displaying area 44, using the scroll bar 48. Thus, a user can confirm all of the retrieved data.

When a user selects one of the listed name in the retrieval result displaying area 44 by the mouse pointer 39, the display condition of the selected name is changed. In Fig. 4, for instance, of "rice cake & persimmon" is selected, the display area for this name is shaded. After the selection, the name, the data body and the keywords of the selected data unit are displayed in the name displaying area 45, the data body displaying area 46 and the keywords displaying area, respectively.

In Fig. 4, "rice cake & persimmon" is displayed for the name, "People pay attention to the medicinal effect of persimmons. ..." for the data body and "bad food combination, rice cake, ..." are keywords in each displaying area. If the data to be displayed in this area overflows, it is possible to scroll and display the overflown data, using scroll bars 49a, 49b, and 49c, respectively.

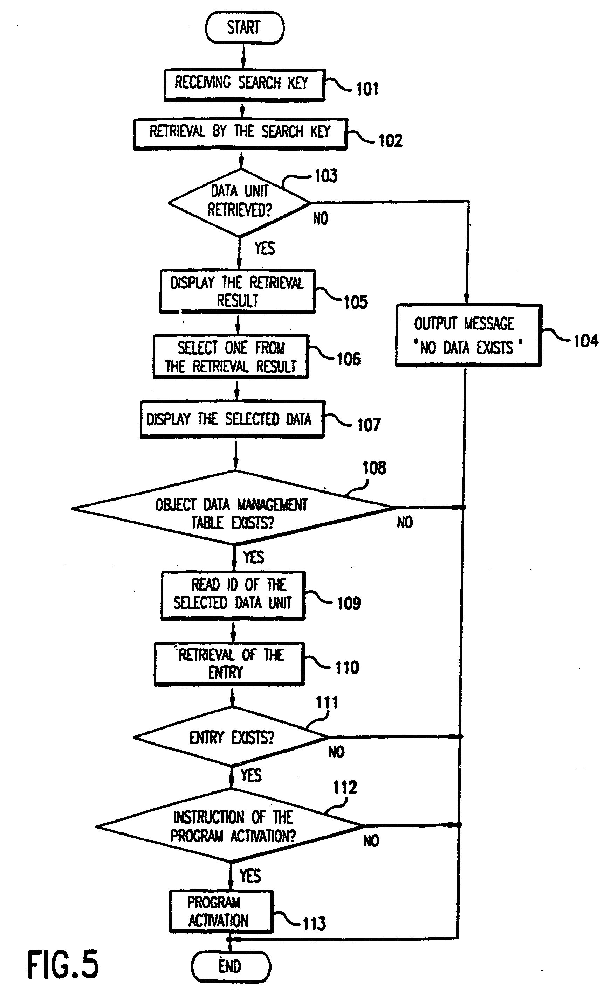

Fig. 5 illustrates a flowchart of the database retrieval processing in the first aspect of the invention of the data management system. The flow of the processing from the retrieval of the data unit from the database to the program activation related to the retrieved data unit will now be explained in detail.

At the beginning of the retrieval processing, in step 101, a search key receival processing is executed. In other words, signals from search keys, which are input in the search key input area 41 by the user, are received. In step 102, the database management section 12 retrieves data units from the database, using signals received from search keys. In step 103, it is determined whether the data unit has been retrieved as the retrieval result. If no data unit has been retrieved, after the output of a message to inform the user of no data unit corresponding to the inputted search key in step 104, the processing is terminated.

If the data unit is retrieved, a list of the names of the retrieved data units is displayed in step 105. In step 106, the data selection processing is executed. In this step, a user selects one of the names from the retrieved data units listed in the retrieval result displaying area 44 by the mouse pointer 39. In step 107, selected data unit is read from the database 11, and displayed. As a result, each name, the data body and the keywords for the selected data unit read from the database 11 are displayed in the name displaying area 45, the data body displaying area 46 and keywords displaying area 47, respectively.

In step 108, it is determined whether the object management table 16, which is referred to by the external object reference management section 13, exists. If a table does not exist, the processing is terminated. On the other hand, if the table exists, the external object reference management section 13 obtains the ID number of the data unit, which is selected and displayed on the screen in step 109. In step 110, the external object reference management section 13 retrieves the entry having an ID number corresponding to the selected data unit from the object management table 16. In step 111, it is determined whether the entry has been retrieved.

If no entry has been retrieved, the processing is terminated. On the other hand, if an entry has been retrieved, then in step 112, it is determined whether the program activation instruction button 43 has been clicked by the mouse pointer. If an instruction button, other than the program activation instruction button 43, has been clicked, then processing is terminated. If the program activation instruction button 43 is clicked in step 113, the external object activation processing, as described below, is executed based on the entry retrieved in the step 110.

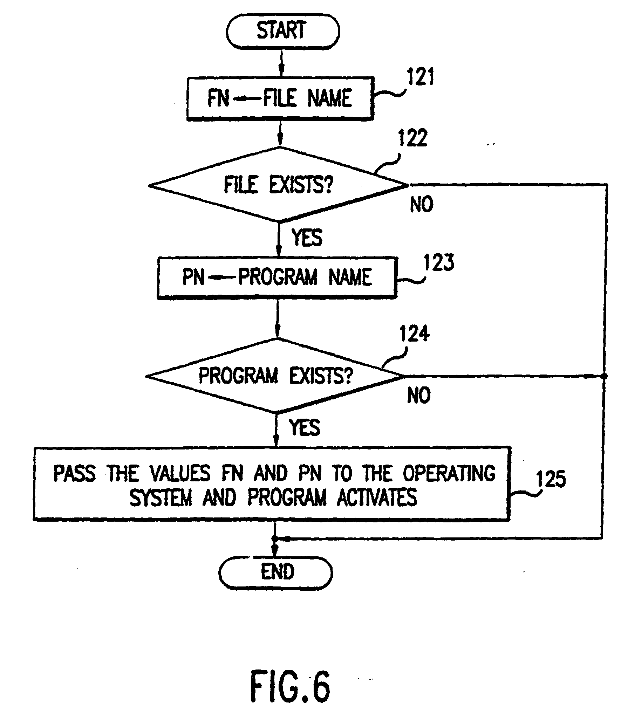

Fig. 6 illustrates a flowchart to explain the external object activation processing. At the beginning of processing in step 121, the file name for the entry as retrieved in step 110 is obtained from the object management table 16, referenced by the external object reference management section 13, and is assigned to the variable FN. In step 122, it determined whether the file identified by the file name assigned to the variable FN exists. If the file does not exist, processing is terminated.

If the file identified by the file name of the variable FN exists, the program name in the entry retrieved in step 110 is obtained from the object management table 16, and is assigned to the variable PN in step 123. In step 124, it is determined whether the program identified by the program name of the variable PN exists. If it does not exist, this processing terminates. On the other hand, if the program identified by the program name of the variable PN exists, then in the next step 125, the file name of the variable FN and the program name of the variable PN are transmitted to the operating system 15. After the program identified by the obtained program name is applied to the data file identified by the file name via the function of operating system, the procedure is terminated.

As described above, the data retrieved from the database is displayed. The program related to the retrieved data is immediately executed in response to a user's instruction.

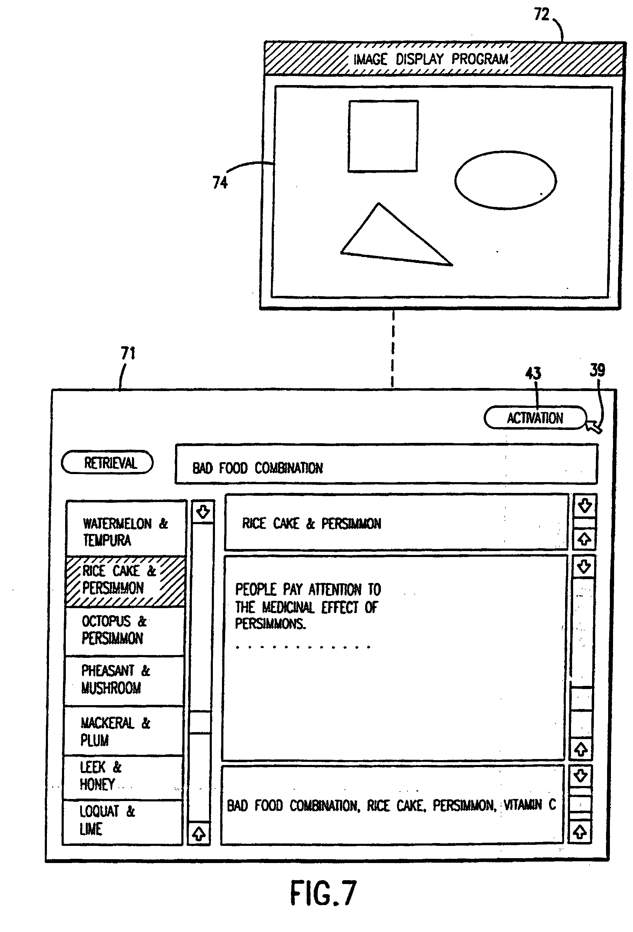

Fig. 7 illustrates a diagram for explaining an operation to activate an image displaying program related to the retrieved data unit. A window 71 illustrates a display condition after the contents of the selected data unit are displayed in step 107, for the flowchart in Fig. 5. In this example, the inputted search key is the "bad food combination", and the selected data unit is "rice cake & persimmon".

The program activation instruction button 43 is set valid and displayed only when the entry corresponding to the selected data unit exists, based on the check of step 111 in the flowchart of Fig. 5. If this valid program activation instruction button 43 is clicked by a mouse pointer 39, the program which is related to the displayed data unit, is activated. In this case, the file and program, which are related to the selected data unit are the image file which stores image data, and the image displaying program that reads the image data stored in the image file and display it on the screen, respectively. As a result of the execution of the image display program, a view window 72 is opened, and image 74 is displayed in the view window 72.

The entry, including the file name of the image data file, the program name of the image display program and the ID number, which is the same as the selected data unit, is stored in the object management table 16. The management table 16 is referred by the external object reference management section 13. The contents of the text file are displayed, rather than the image file and the image display program, if a pair of the text file and text display program is related to the selected data unit. Further, if the file name identifies a text file and the program name identifies a program to activate a text editor, an editor operation window is opened so that a user can immediately edit the text file.

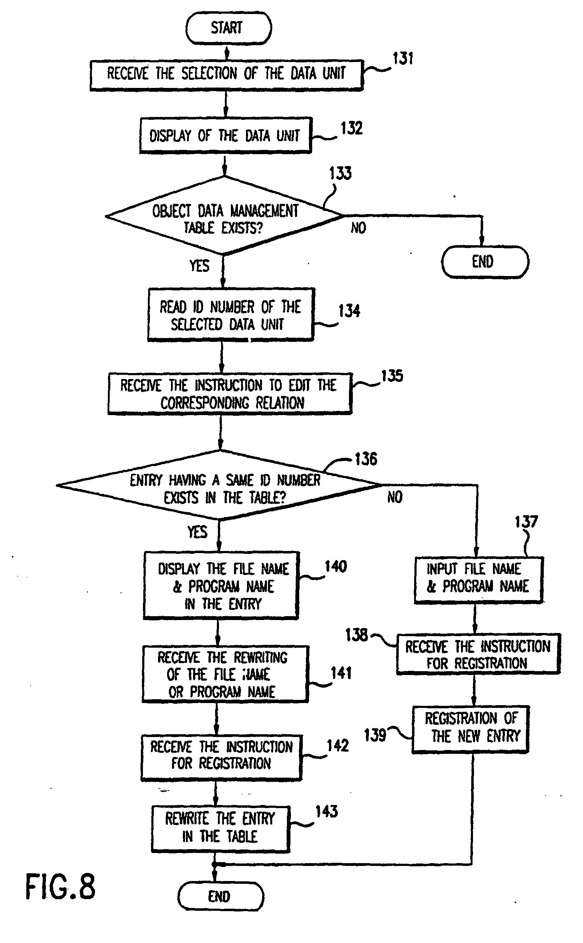

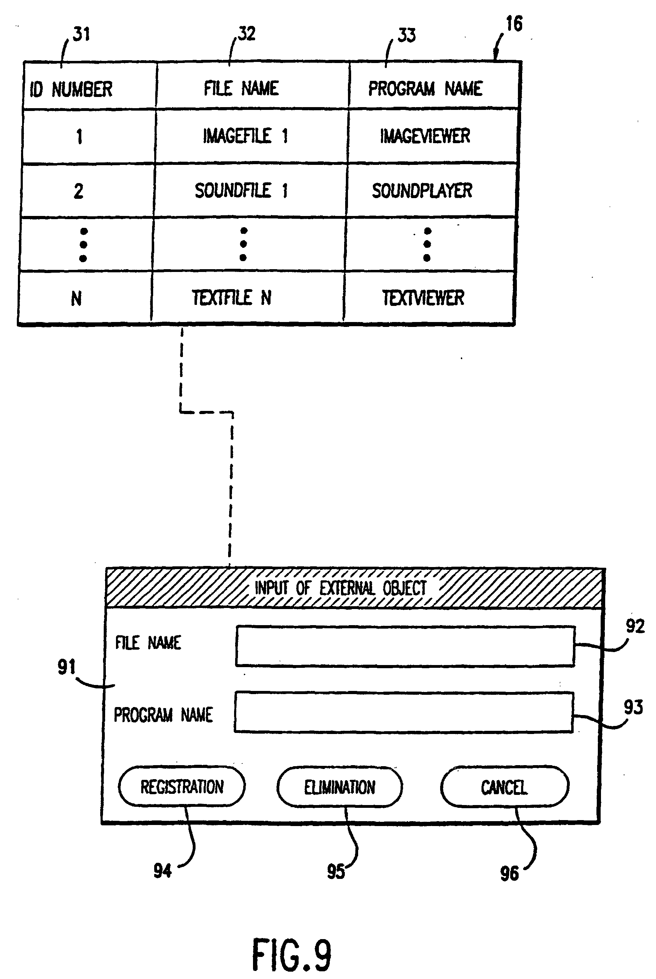

An external object edit processing will now be explained. This processing includes three sub-processings, a new registration of the external relationship, a modification of the existed external relationship and an elimination of the external relationship. Fig. 8 illustrates a flowchart for the external object registration processing. Fig. 9 illustrates an example of an external object input window for the external object edit processing. This processing is explained with reference to these figures.

At first, the configuration of the external object input window is explained. Fig. 9 includes the external object input window 91 displayed on the screen, which includes a file name input area 92, a program name input area 93, a registration button 94, an elimination button 95 and a cancel button 96. The file name input area 92 and the program name input area 93 are the areas for inputting the file name and the program name to be related to one of the data units in the database, respectively. The object management table 16 shown in Fig. 9 is same as in Fig. 3. After the input of the file name and program name, if a user gives an registration instruction by clicking the registration button 94, the input file name, the input program name and the ID number of the data unit to be related are stored in the file name field 32, the program name field 33 and the ID number field in a entry, respectively. These are stored as an external relationship. Elimination button 95 is used for eliminating an entry in the object management table 16.

The external object edit processing, which is executed by using the input operation display described above, is now explained referring to the flowchart, shown in Fig. 8.

This flowchart of Fig. 8 includes the registration and modification processing. At the beginning of this processing, a selection of the data unit of the database is received, and the contents of the selected data unit are displayed in step 131. For example, as described in Fig. 4, if one of the names listed in the retrieval result displaying area 44 is selected by the mouse pointer 39, the contents of the data unit identified by the selected name are displayed. The data name, the data body and keywords for the selected data unit are read from the database and displayed in the name displaying area 45, the data body displaying area 46 and the keywords displaying area 47, respectively.

In step 133, it is determined whether the object management table 16, which is referred by the external object reference management section 13, exists. If the table 16 does not exist, the processing is terminated, because it not possible to register an external relationship. If the table exists, the ID number of the data unit selected in step 131 is obtained in step 134. In step 135, if a user has instructed editing to start, the external relationship, the external object input window 91 is opened on the screen. Then in step 136, it is determined whether the entry whose ID number is corresponding to that of the selected data unit, exists in the object management table 16.

In step 136, if no entry whose ID number corresponds to the ID number for the selected data unit exists, the processing proceeds from step 137 to step 139 and registers a new entry to the object management table 16. However, if the entry exists, the processing comes from step 140 to step 143 to modify the entry.

For new entry registration to the object management table 16, a user inputs the file name and the program name in the file name input area 92 and the program name input area 93 in the external object input window 91, respectively, in step 137. In the step 138, the registration instruction is received by detecting a clicking on the registration button 94. In step 139, a new entry of the external relationship, which relates the external objects and the data unit in the database, is registered to the object management table 16. The ID number field, the file name field and the program name field of the newly registered entry includes the ID number of the selected data unit in the database, the file name inputted to the file name input area 92 and the program name inputted to the program name input area 93, respectively. Thus, a new entry is registered as the external relationship to the object management table 16.

For the modification of the entry already in the object management table 16 in step 140, the file name and the program name are read from an entry having the ID number corresponding to the ID number of the selected data unit, which was obtained in step 134. The read file name and the read program name are displayed in the file name input area 92 and the program name input area 93, respectively. In step 141, a user rewrites the file name or the program name displayed in each name input area. In step 142, a registration instruction is received by detecting clicking on the registration button 94. In step 143, after an entry in the object management table 16 is modified based on the rewritten file name and the rewritten program name, processing is terminated.

In step 142, the start of the registration is instructed, based on the file name and the program name rewritten in step 141. In step 143, the file name and program name stored in the entry are altered by the file name and program name as rewritten in step 141, then the processing is terminated. If both of the file name and program name are not rewritten, there is no need to modify the entry. Further, it is possible to modify the field of the entry only where the name is rewritten. In this case, whether it must be determined the file name or program name has been rewritten.

If "cancel" is instructed from the user by clicking a cancel button 96, instead of a registration instruction, processing is immediately terminated. Further, if the file or program identified by the file name or the program name inputted by the user does not exist, it is possible to output a message to inform the user and to prompt the user for a further input.

In this example, the object management table 16 stores only one entry for each data unit in the database 11. Each data unit in the database 11 corresponds to one pair of the data file and program.

It is possible to store more than one entry for one of the data units. In this case, the processing for the modification of the entry is not needed and the database retrieval processing shown in Fig. 5, a plurality of entries may be retrieved in step 110. Because it is impractical to simultaneously activate all programs related to one of the data unit, modifications are needed for the activation of the program. For example, the window for the retrieval shown in Fig. 4 includes a plurality of program activation instruction buttons, each of which corresponds to one of the retrieved entries. Accordingly, after a user selects one of the program activation instruction buttons, a program corresponding to the selected button is activated.

Because the external object reference management section 13 passes the program name to the operating system 15, the program need only be executable on the operating system 15. On the other hand, the file name must be in a form that enables direction of the existing position of the file in a file system controlled by the operating system 15. In such a case, the file name must show the relative position from the position where the database exists, or must be in a form similar to an absolute path. Moreover, it is possible that an area of the storage for files is determined in advance, and that the external object reference management section 13 searches the predetermined area of the storage, if the file name is not in a relative form or absolute form.

As described above, in the data management system for the first aspect of the invention, the object management table 16 is equipped for storing a pair of a file name and program name which corresponds to the data unit in the database, to apply the program identified by the program name to the data file identified by the file name after the data unit is retrieved. The external object reference management section 13 can also control the execution of the program related to the data unit in the database under a user's instruction.

Therefore, without any change of the data structure of the database, such as the database schema, it is possible to relate external objects, such as a data file or a program, which exists outside of the database, to the data unit in the database. Further it is possible to manage the controlling of the processing for the related external objects.

To avoid complicating the processing mechanism for the external object reference management section 13, it is possible to configure-the storing mechanism and retrieval mechanism for the external relationship with a similar storing mechanism and retrieval mechanism as the database 11. This causes a simplified configuration for the data processing of the external object reference management section 13.

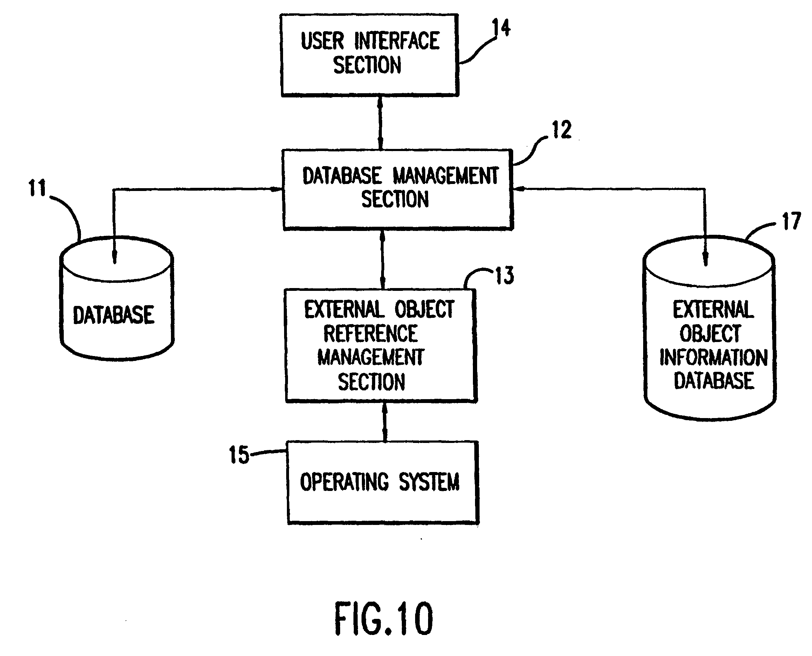

In the second aspect of the invention, this type of system is explained. Fig. 10 illustrates a block diagram of main sections of the data management system according to the second aspect of the invention. Fig. 10 includes the database 11, the database management section 12, the external object reference management section 13, operating system 15 and object management database 17.

The database 11, the user interface section 14 and operating system 15 are similar to the aspect of the invention described above. Accordingly, no further explanation is made. In the second aspect of the invention, the data management system includes the external object database 17 rather than the object management table 16, in Fig. 1.

The object management database 17 stores an external relationship in the same data structure as the database 11 to relate the external objects to the data unit of the database 11. The database management section 12 retrieves the external relationship stored in the object management database 17, as well as the data unit in the database 11. The external object reference management section 13 functions similar as the first aspect of the invention, but because of the change of the data structure to store the external relationship, the actual operation is slightly changed.

Thus, although the external object reference management section 13 directly relies on the object management table 16 to manage the external objects that are to be related to the data unit of the database 11, it is configurated to use the same storing mechanism and retrieval mechanism, as the database 11. As a result, the external object reference management section 13 shares processing of the storing and retrieval with the database management section 12, for the management of the external relationship. It simplifies the control of the external object reference management section 13.

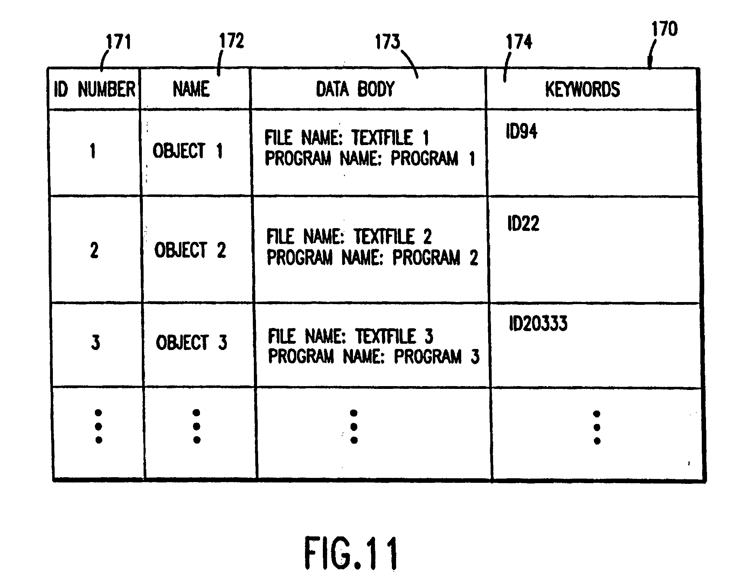

Fig. 11 illustrates the data structure of the external object management database 17. The data structure is similar to the database 11 in Fig. 2. As shown in Fig. 11, the external object management database 17 is in a form of table 170, where each row represents a data unit for the external relationship, which relates to one of the data units stored in database 11 to the data file and the program for its processing. The data unit for the corresponding relationship includes an ID number field 171, a name field 172, a data body field 173 and a keywords field 174. An ID number stored in the ID number field is assigned to each data unit for the external relationship, and identifies the data unit in the database 17. The unique ID number is automatically assigned to each data unit.

In the name field 172, a name to be assigned to the data unit for the external relationship is stored. In the body field 173, a file name and the program name are stored as the data body. For example, in Fig. 11, a character string "TextFiles3" following to the "File name :" represents the file name, and "Program3" following to the "Program name :" represents the program name.

In the keywords field 174, a keyword corresponding to the ID number of the data unit stored in the database 11, which is related to the external objects defines by the file name and the program name stored in the data body field 173, is stored. For instance in Fig. 11, the data unit for the external relationship of the third row in table 170, whose ID number is "3" and whose data name is "Object3", includes "ID20333" as a keyword in the keywords field. The keyword "ID20333" indicates that this data unit for the external relationship is related to the data unit whose ID number is 20333 in the data base 11. In other words, this data unit for the external relationship can be retrieved by the search key "ID20333."

The external object reference management section 13 is not required to have the original management mechanism for the registration and the retrieval of the external relationship. The processing for the storing or retrieval of the external relationship is executed by the existing database management section 12 based on an instruction from the external object reference management section 13. This causes the simple configuration of the system and further upgrade of the reliability is expected.

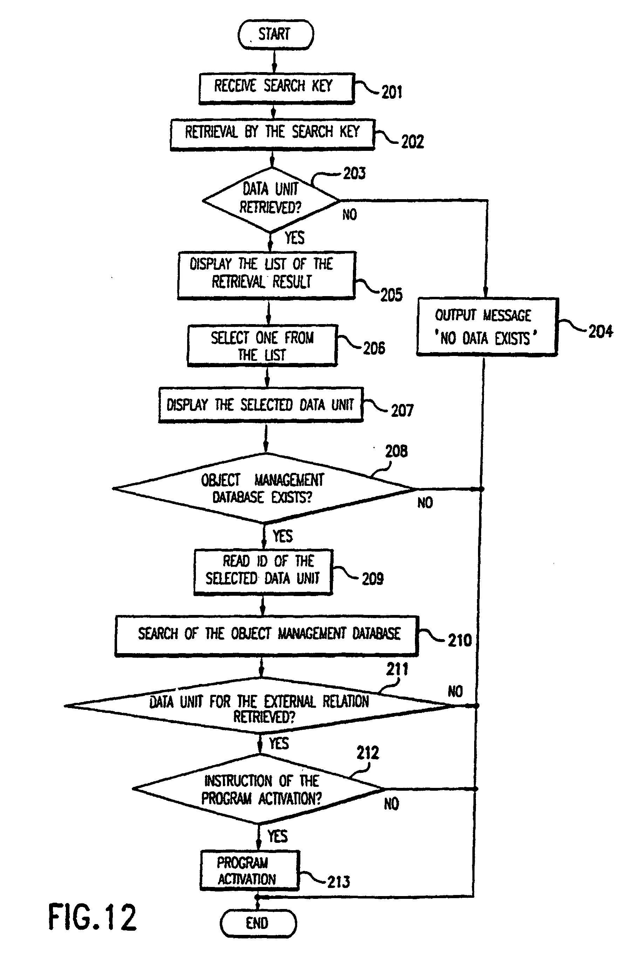

Fig. 12 illustrates a flowchart for explaining the database retrieval processing of the data management system. The processing from the retrieval of the data unit from the database 11 to the activation of the program related to the data unit retrieved from the database 11 will now be explained in detail.

The processing from steps 201-207 are same as that of from steps 101 107 in Fig. 5, respectively. For this reason, a further explanation of these steps is not necessary. The explanation is started at step 208.

In step 208, it is determined whether the object management database exists. If the object management database does not exist, the processing is terminated. If the object management database exists, steps 209-213 are executed to activate a program related to the data unit selected in step 206.

In step 209, the external object reference management section 13 obtains an ID number for the selected and displayed data unit of the database 11. In step 210, the object management database 17 is searched based on the ID number obtained in step 209. In step 209, the external object reference management section 13 generates a search key in accordance with the obtained ID number, and passes it to the database management section 12. A character string "ID" and obtained ID number are connected to generate the search key. The database management section 12 receives the search key from the external object reference management section 13, and then retrieves a data unit for the external relationship, as a retrieval result from the object management database 17 by the search key. In step 211, the retrieval result is checked to determine whether it is empty. If the retrieval result is empty, that is to say, there is no data unit for the external relationship retrieved from the object management database 17, the processing is terminated.

If, in step 211, the data unit for the external relationship is retrieved as a retrieval result, then it is then determined whether a user indicated the instruction for program activation in step 212. If there is no user instruction for program activation, the processing is not continued. If the user instructs program activation, for example by a mouse pointer, after the external object activation processing has been executed in step 213, the processing is terminated.

This external object activation processing is similar to the processing described in Fig. 6, except that an external relationship is in a form of the data unit in the object management database 17. Therefore, only the outline of the processing is explained with reference to the Fig. 6. Referring to the retrieval result obtained in step 210, the character string following to the "File name:", which stored in the data body field 173, is read and assigned to the variable FN in step 121. The existence of a data file identified by the file name of the variable FN is checked in step 122. If the data file does not exist, the processing is terminated.

If the data file exists, the character string following to the "Program name:" is read, and assigned to the variable PN in step 123. The existence of a program identified by the program name of the variable PN is also checked in step 124. If the program does not exist, the processing is terminated. If a program exists, the file name of the variable FN and the program name of the variable PN are transmitted to the operating system 15. The program, identified by the program name of the variable PN, is activated via the function provided by the operation system to process the data file identified by the file name of the variable FN.

The external object edit processing is essentially equivalent to the processing described in Fig. 8. Users will not experience a difference, because the external object input window for editing the external relationship is similar to the window shown in Fig. 9. Internal processing is different, because of differences in the storing mechanism for the external relationship. The outline of the difference is explained with reference to the Fig. 8.

In step 136, the external object reference management section 13 generates a search key based on an ID number selected in step 132, and passes it to the database management section 12. The database management section retrieves a data unit for the external relationship from the object management database using the search key to obtain a retrieval result. If the retrieval result is empty, there is no data unit for the external relationship to correspond to the selected data unit. Accordingly, the registration processing is then started. On the other hand, if the retrieval result includes the data unit for the external relationship, modification processing is started.

In the step 139 for the new registration, the external object reference management section 13 generates a data body, which includes the character string "File name :" followed by the inputted file name and "Program name :" followed by the inputted program name. This is then passed to the database management system 12. The database management system 12 registers the data body received from the external object management section 13 in the data body field 173, and the search key received in step 136 to the keywords field 174 as the keyword, to generate new data unit for the external relationship. At this time, an ID number and name of the new data unit are automatically determined.

In the step 143, modification is based on the data body stored in the data body field of the retrieved data unit for the external relationship in step 136. That is to say, the file name following to the "File name :" and the program name following to the "Program name :" are modified by the file name and program name rewritten by the user through the external object input window 91. Other fields are not required to change.

The data management system for the second aspect of the invention includes the external object reference management section 13 and object management database 17 to relate a pair of a file and program for processing the file to one of the data unit in the existing database. Both of the file and program originally exist outside of the database, without any relationship to the existing database. Further, the object management database is configured by a similar data structured as database 11, to avoid the complexity of the system configuration. This external object reference management section 13 shares the storing mechanism and retrieval mechanism for the external relationship with the database management section 12. This causes the simplification of the configuration for the data processing mechanism. Further, although the database 12 and object management database 17 are exclusively of each other, the external relationship can be registered as a data unit in the database 12, if the database 12 is allowed to register a new data unit.

The data management system of this invention can also include a alternate program section to enable the program related to the data unit in the database to execute on the multi platforms. The configuration of this type of data management system of the present invention will now be explained in accordance with a third aspect of the invention.

An example for configurating the system where a database is moved, is now explained. For instance, the database is either moved from a memory position to another in the same storage apparatus, transferred from a storage apparatus to another, or transferred from a computer system to another so as to be used on it. In a detailed example, a database is generated on the desk-top computer system, and then is transferred to the lap-top computer system for be use thereon. The file and program which are related to the data unit in the database must be altered, so that it is compatible to the lap-top computer system to which the database is transferred.

The program name related to the data unit of the database is transmitted to the operation system and the operation system executes the program according to the received program name, as previously described. At this time, there will be no problems if the operating system of the computer system, to which the database is transferred, can execute the program identified by the received program name. However, if the database itself is transferred to another computer system for use thereon, there is no guarantee that the program related to the data unit can exist in the database. Further, if the database is transferred among different operating systems, it is possible that the program identified in a first computer system cannot be identified in a second computer system. Accordingly a program alternate section in the data management system for the third aspect of the invention is equipped for resolving this problem.

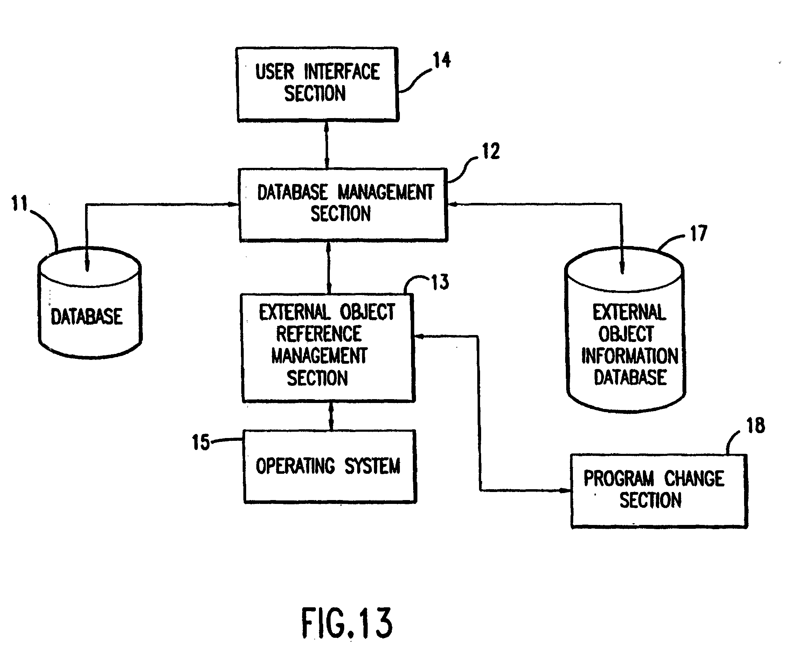

The configuration of the data management system is based on the second aspect of the invention. Fig. 13 illustrates a block diagram main sections for a configuration of the data management system in a third aspect of the invention. In Fig. 13, a database 11, a database management section 12, an external object reference management section 13, an operating system 15, a object management database 17 and a program alternate section 18 are included.

The database 11, the database management section 12, the external object reference management section 13, a user interface section 14 and the operating system 15 are substantially similar to those described with respect to in Fig. 2. The program alternate section 18 is added herein.

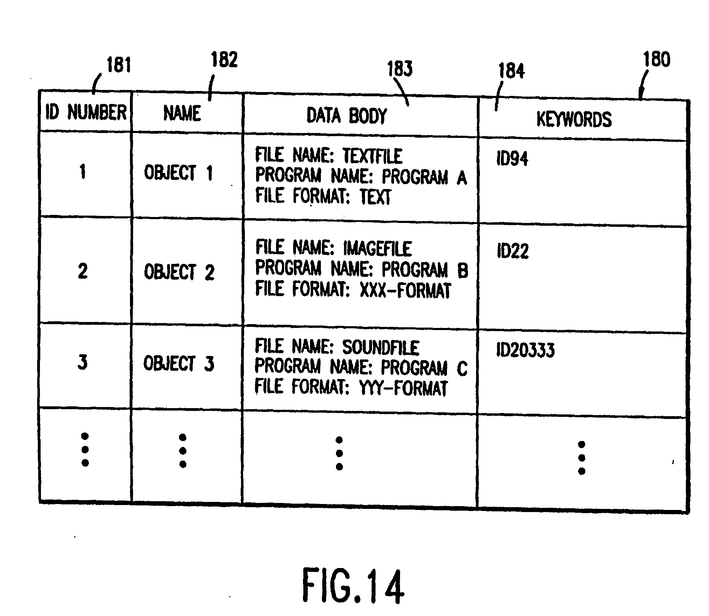

Fig. 14 shows a data structure of the object management database 17. This data structure is similar to the database 11 in Fig. 2. Thus, the data structure of the external object management database 17 is comprises a table 180, each of whose row is a data unit for the corresponding information relating to one of the data unit in the database 11 to the data file and the program to process it. The data unit for the external relationship includes an ID number field 181, a name field 182, a body field 183 and a keywords field 184. An ID number in the ID number field 181 is uniquely assigned to each data unit, and the data unit is identified by the ID number in the object management database 17.

In the name field 182, a name assigned to the data unit for the external relationship is stored as on the second aspect of the invention. A file name, a program name and a file format for using program alternation, are stored in the body field 183. As in the second aspect of the invention, the ID number of the data unit in the database 11 to be related in the keywords field 184.

For instance, in Fig. 14, the data unit for the external relationship of the second row in the table 180, whose ID number is "2" and whose data name is "object2", has file format information, that is "XXX-Format" following to the "File format:" in the data body field. The file format information is not always required to be stored in the data body field, because it can be determined by checking contents of the data file. However, to simplify processing of the program alternate section, the file format information is included in the data body field of the data unit for the external relationship.

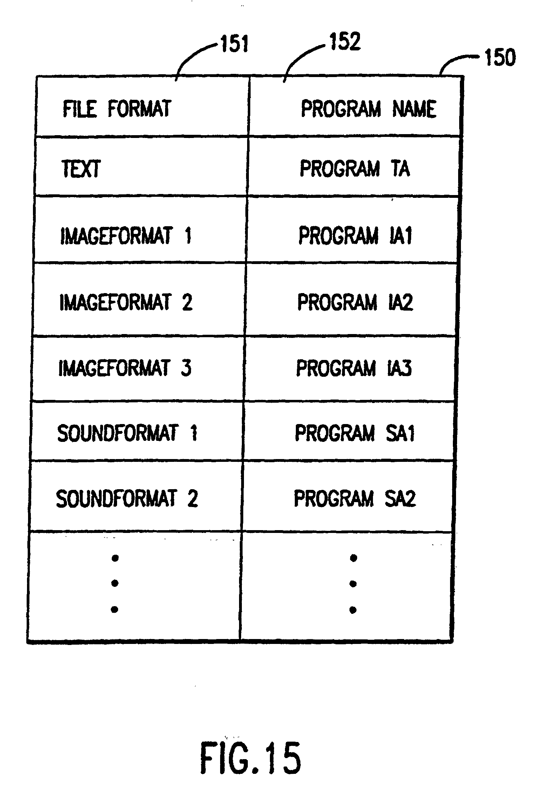

Fig. 15 illustrates an example of a program alternate table to be used for altering the program based on the file format. The program alternate table shown in Fig. 15 is stored in the program alternate section 18. The data structure of this table is, as shown in Fig. 15, is structured from a file format field 151 and program name field 152. The file format field 151 includes a file format, and the program name field 152 includes a name of program, which can process the data file of the file format in the file format field. If the program corresponding to the data file format in the file format field does not exist, the program name field 152 remains empty.

Further, the user can rewrite a program name to be stored in the program name field to a program name selected by the user. Because it is unrealistic and difficult to list all of the file formats and to prepare a program corresponding to each file format, the contents of the program alternate table 150 can be rewritten by the user at any time.

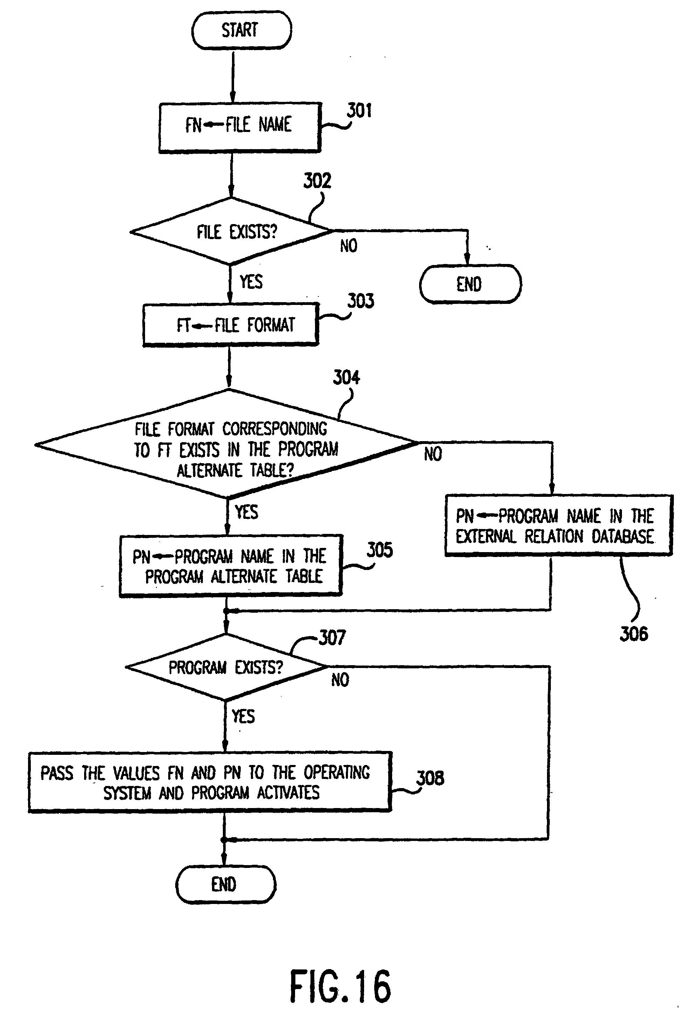

Fig. 16 illustrates a flowchart illustrative of the external object activation processing, including the program alteration processing of the program alternate section 18. The external object activation processing executed in the external object reference management section 13, which uses the program alternate section 18, is now explained in detail, with reference to Fig. 16.

At the beginning of the processing, a character string following to the "File name :" in the data body field of the retrieved data unit for the external relationship is read, and is assigned to the variable FN in step 301. In the next step 302, existence of the data file identified by the file name of the variable FN is determined. As a result, if the data file does not exist, the processing is terminated.

On the other hand, if, for example, the data file identified by the file name of FN, a character string following to the "File format :" is read, and stored in the variable FT in step 303. In the next step 304, it is determined whether the file format, which is corresponding to the file format of FT, exists in the program alternate table in the program alternate section 18. If the file format exists, the program name corresponding to the file format of FT is read from the program alternate table, and is stored in the variable PN in step 304.

If, in step 304, the existence of the file format corresponding to the FT is not guaranteed, the character string following to the "Program name :" in the body field of the retrieved data unit as the external relationship is read, and is stored in the variable PN. In this manner, because the program name in the program alternate table has priority even if the program name in the data body field is empty, the program name in the program alternate table can be used. In other words, a user is not required to determine the program related to the data unit in the database, when the file format of the file to be processed is registered in the program alternate table. This is useful when the database is to be transferred between the different computer systems.

After the program name is stored in PN based on the file format in the steps described above, it is determined whether the program identified by the program name of variable PN exists in step 307. As a result, if the program does not exist, the processing is terminated. If the program exists, the file name of the variable FN and the program name of variable PN are transmitted to the operating system in step 308. After the program is activated via the operation system, the processing is complete.

Moreover, if the program alternate section 18 equips the file format converting function for data file, more flexible processing is possible. For instance, it is possible to automatically convert data file format automatically before the execution of the processing in step 304 as seen in Fig. 16. In this third aspect of the invention, the program is dynamically altered based on the data file format at the time of the program activation. However, it is possible to alter the external relationship referred by the external object reference management section, i.e., to directly rewrite the program name in the object management table. It is also possible to rewrite all program names, instead of rewriting at every instance of program activation.

In this manner, the data management system can flexibly display or recover the various object on the different computer systems flexibly. Further, it is possible to arrange electronic objects, such as programs or data files, in a cyber space, because the program is carried on in accordance with the file format by using the mechanism.

While this invention has been described in conjunction with specific embodiments thereof, is evident that many alternatives, modifications and variations will be apparent to those skilled in the art. Accordingly, the preferred aspect of the invention as set forth herein are intended to be illustrative, not limiting. Various changes may be made without departing from the scope of the invention as defined in the following claims.

## Claims

1. A data management system comprising:
a first database (11) for storing a plurality of first data units;
a plurality of data files each datafile existing outside of the first database (11);
one or more programs each for processing at least one of the data files and existing outside of the first database (11);
external relationship storing means (16), provided separately from the first database (11), for storing beforehand at least one item of external relational information each item relating a first data unit stored in the first database (11) to at least one of said data files and at least one of said one or more programs;
database retrieval means (12) for retrieving at least one first data unit from the first database (11);
means for retrieving at least one item of the external relational information stored beforehand in said external relationship storing means, the retrieved item corresponding to the first data unit retrieved before by said database retrieval means ;
user instruction receiving means (14) for receiving a user's instruction to activate a program; and
file and program determining means (15) for determining, in response to the user's instruction received by the user instruction receiving means (14) and the item of external relational information related to said retrieved first data unit, the at least one data file and the at least one program related to the retrieved first data unit, and for invoking the at least one program to process the at least one data file.

2. A data management system as defined in claim 1, wherein the external relationship storing means (16) stores the external relational information in a form of a table (16) which includes at least one entry having an identifier corresponding to that of a related first data unit, at least one data file name and at least one program name, and the file and program determining means (15) retrieves from the external relationship storing means (16) at least one entry whose identifier corresponds to that of the retrieved first data, and determines the at least one data file and the at least one program in accordance with the data file name and the program name included in the retrieved entry.

3. A data management system according to any one of the preceding claims, wherein
the external relationship storing means (16) comprises an external relationship database (17) defined by the same data structure as the first database (11), which stores at least one second data unit, and the system further comprises,
external relationship retrieval instructing means (13) for giving the database retrieval means (12) a retrieval instruction to retrieve from the external relationship database (17) at least one second data unit, and wherein
the database retrieval means (12) further retrieves from the external relationship database (17) the at least one second data unit corresponding to the first data unit retrieved from the first database (11) in response to the retrieval instruction from the external relationship retrieval instructing means (13), and
the file and program determining means (15) determines the at least one data file and the at least one program in accordance with the second data unit retrieved by the database retrieval means (12).

4. A data management system according to claim 3, wherein each first data unit includes an identifier which identifies the data unit, a data body which represents a main data, and a keyword to be used for retrieving the data unit,
each second data unit includes an identifier which identifies the second data unit, a data body which represents at least one data file name and at least one program name, and a keyword corresponding to the identifier of the related first data unit,
the database retrieval means (12) receives a first search key from a user, and retrieves the first data unit, whose keyword corresponds to the first search key, from the first database (11),
the external relationship retrieval instructing means (13) generates a second search key corresponding to the identifier of the retrieved first data unit, and gives it to the database retrieval means (12) as the retrieval instruction,
the database retrieval means (12) further retrieves from the external relationship database (17) at least one second data unit whose keyword corresponds to the second search key, and
the file and program determining means (15) determines the at least one data file and the at least one program in accordance with the data file name and the program name included in the at least one retrieved second data unit.

5. A data management system according to any one of the preceding claims, further comprising:
file format relationship storing means (16) for storing file format relationships which relate a file format to a program for processing a data file defined by the file format; and wherein the file and program determining means (15) comprises,
file determining means for determining the at least one data files which is related to the data unit retrieved by the database retrieval means (12) in accordance with the external relational information stored in the external relationship storing means (16);
file format determining means for determining the file format of the data file determined by the file determining means; and
program determining means for determining the at least one program from said one or more programs in accordance with the file format determined by the file format determining means and the file format relationships stored in the file format relationship storing means (16).

6. A data management system according to claim 5, wherein
the external relationship storing means (16) further stores a file format corresponding to each data file, and
the file format determining means determines the file format by retrieving the file format corresponding to the data file determined by the file determining means from the external relationship storing means (16).

7. A data management system according to any one of the preceding claims, further comprising:
external relationship editing means for adding a new external relational information to the external relationship storing means (16), modifying or eliminating the external relational information stored in the external relationship storing means (16).

8. A data management system according to any one of the preceding claims, further comprising,
a user interface display means including,
a search key input area (41) for inputting a search key;
a database retrieval indicating area (42) for indicating the retrieval of the data unit from the first database (11) using the search key inputted in the search key input area (41), which is executed by the database retrieval means (12);
a retrieval result display area (44) for displaying the content of the data unit retrieved by the database retrieving means; and
a program activation indicating area (43) for indicating the instruction to activate the program related to the data unit displayed in the retrieval result display area (44), which is received by the user instruction receiving means (14).

9. A data management system according to claim 8, wherein
the program activation indicating area (43) accepts the indication only if the external relational information corresponding to the first data unit retrieved from the first database (11) exists.

10. A data management method for managing a first database (11) that stores a plurality of first data units, a plurality of data files each data file existing outside of the first database (11) and one or more programs, each program for processing at least one of the data files and existing outside of the first database (11), the method comprising:
(a) registering beforehand at least one item of external relational information, each item relating a first data unit stored in the first database (11) to at least one of the data files and at least one of said one or more programs;
(b) retrieving at least one of the first data units from the first database (11);
(c) retrieving at least one item of the external relational information registered in step (a), the retrieved item corresponding to the first data unit retrieved in step (b);
(d) receiving a user's instruction to activate a program; and
(e) determining, in response to the user's instruction received in step (d) and the item of external relational information retrieved in step (c), the at least one data file and the at least one program related to the first data unit retrieve and in step (b), and invoking the at least one program to process the at least one data file.

11. The method of claim 10, wherein
each of the first data units includes an identifier to identify the data unit, a data body which represents main data and a keyword to retrieve the first data unit;
each external relational information is in a form of a second data unit which includes an identifier to identify the second data unit, a file name and a program name as a data body, and a keyword to retrieve the second data unit corresponding to the identifier of a related first data unit stored in the first database (11); and the method comprises:
(f) receiving a first search key from a user;
retrieving, in step (b), at least one first data unit whose keyword corresponds to the received first search key;
(g) generating a second search key in accordance with the identifier of the first data unit retrieved in step (b);
retrieving in step (c) at least one second data unit whose keyword corresponds to the second search key; and
invoking in step (e) the program identified by the program name included in the second data unit retrieved in step (c) to process the data file identified by the file name included in the second data unit retrieved in step (c).

12. The method of claim 10 further comprising:
(f) registering beforehand at least one file format relationship which relates a file format to a program for processing a data file defined by the file format;
(g) determining the file format of a data file designated by the external relational information retrieved in step (c);
(h) retrieving the file format relationship in accordance with the determined file format; and
invoking in step (e) a program designated by the file format relationship retrieved in step (h) to process the data file whose file format is determined in step (g).

## Patentansprüche

1. Datenmanagementsystem, umfassend:
eine erste Datenbank (11) zur Speicherung einer Vielzahl einer ersten Dateneinheiten;
eine Vielzahl von Datendateien, die alle außerhalb der ersten Datenbank (11) existieren;
eines oder mehrere außerhalb der Datenbank (11) existierende Programme jeweils zur Verarbeitung wenigstens einer der Datendateien;
eine Speicheranordnung (16) für externe Relationen, die gesondert von der ersten Datenbank (11) vorgesehen ist, zur vorab erfolgenden Speicherung wenigstens eines Elements externer relationaler Information, wobei jedes Element eine erste in der ersten Datenbank (11) gespeicherte Dateneinheit mit wenigstens einer der Datendateien und wenigstens einem des einem oder der mehreren Programme verbindet;
Datenbankabrufmittel (12) zum Abruf wenigstens einer ersten Dateneinheit von der ersten Datenbank (11);
Mittel zum Abrufen wenigstens eines Elements der extemen relationalen Information, die vorab in der Speicheranordnung für externe Relationen gespeichert ist, wobei das abgerufene Element der zuvor von den Datenbankabrufmitteln abgerufenen ersten Dateneinheit entspricht;
Benutzerbefehlsempfangsmittel (14) zum Empfang des Befehls eines Benutzers zur Aktivierung eines Programms; und
Datei- und Programm-Bestimmungsmittel (15) zur Bestimmung, als Reaktion auf den von den Benutzerbefehlsempfangsmitteln (14) empfangenen Befehl des Benutzers und das Element externer relationaler Information, das mit der abgerufenen ersten Dateneinheit verbunden ist, der wenigstens einen Datendatei und des wenigstens einen Programms, die mit der abgerufenen ersten Dateneinheit verbunden sind, und zum Aufruf des wenigstens einen Programms zur Verarbeitung der wenigstens einen Datendatei.

2. Datenmanagementsystem nach Anspruch 1, bei dem die Speicheranordnung (16) für externe Relationen die externe relationale Information in Form einer Tabelle (16) speichert, welche wenigstens einen Eintrag mit einem Identifizierer besitzt, der dem einer verbundenen ersten Dateneinheit entspricht, wenigstens einen Datendateinamen und wenigstens einen Programmnamen, und bei dem die Dateien- und Programm-Bestimmungsmittel (15) von der Speicheranordnung (16) für externe Relationen wenigstens einen Eintrag abrufen, dessen Identifizierer den der abgerufenen ersten Daten entspricht, und die wenigstens eine Datendatei und das wenigstens eine Programm nach Maßgabe des im abgerufenen Eintrag enthaltenen Datendateinamens und Programmnamens ermitteln.

3. Datenmanagementsystem nach einem der vorhergehenden Ansprüche, bei dem
die Speicheranordnung (16) für externe Relationen eine Datenbank (17) für externe Relationen umfaßt, die durch dieselbe Datenstruktur wie die erste Datenbank (11) definiert ist und wenigstens eine zweite Dateneinheit speichert, und bei dem das System ferner umfaßt,
Abrufbefehlsmittel (13) für externe Relationen, um den Datenbankabrufmitteln (12) einen Abrufbefehl zu geben, damit von der Datenbank (17) für externe Relationen wenigstens eine zweite Dateneinheit abgerufen wird, und bei dem
die Datenbankabrufmittel (12) ferner aus der Datenbank (17) für externe Relationen die wenigstens eine zweite Dateneinheit entsprechend der aus der ersten Datenbank (11) abgerufenen ersten Dateneinheit als Antwort auf den Abrufbefehl von den Abrufbefehlsmitteln (13) für externe Relationen abrufen, und
die Datei- und Programm-Bestimmungsmittel (15) die wenigstens eine Datendatei und das wenigstens eine Programm nach Maßgabe der zweiten Dateneinheit ermitteln, die von den Datenbankabrufmitteln (12) abgerufen wird.

4. Datenmanagementsystem nach Anspruch 3, bei dem die erste Dateneinheit einen Identifizierer enthält, der die Dateneinheit identifiziert, einen Datenkörper, der Hauptdaten repräsentiert, und ein Schlüsselwort zur Benutzung beim Abruf der Dateneinheit,
wobei jede zweite Dateneinheit einen Identifizierer enthält, der die zweite Dateneinheit identifiziert, einen Datenkörper, der wenigstens einen Dateinamen und wenigstens einen Programmnamen darstellt, und ein Schlüsselwort, welches dem Identifizierer der verbundenen ersten Dateneinheit entspricht,
wobei die Datenbankabrufmittel (12) von einem Benutzer einen ersten Suchschlüssel empfangen und diejenige erste Dateneinheit aus der ersten Datenbank (11) abrufen, deren Schlüsselwort dem ersten Suchschlüssel entspricht,
die Abrufbefehlsmittel (13) für externe Relationen einen zweiten Suchschlüssel entsprechend dem Identifizierer der abgerufenen ersten Dateneinheit erzeugen und ihn an die Datenbankabrufmittel (12) als Abrufbefehl geben,
die Datenbankabrufmittel (12) weiterhin von der Datenbank (17) für externe Relationen wenigstens eine zweite Dateneinheit abrufen, deren Schlüsselwort dem zweiten Suchschlüssel entspricht, und
die Datei- und Programm-Bestimmungsmittel (15) die wenigstens eine Datendatei und das wenigstens eine Programm nach Maßgabe des Datendateinamens und des Programmnamens ermitteln, die in der wenigstens einen abgerufenen zweiten Dateneinheit enthalten sind.

5. Datenmanagementsystem nach einem der vorhergehenden Ansprüche, ferner umfassend:
eine Speicheranordnung (16) für Dateiformatrelationen zur Speicherung von Dateiformatrelationen, welche ein Dateiformat mit einem Programm zur Verarbeitung einer durch das Dateiformat definierten Datendatei verbinden; und wobei die Datei- und Programm-Bestimmungsmittel (15) umfassen,
Dateibestimmungsmittel zur Ermittlung der wenigstens einen Datendatei, die mit der Dateneinheit verbunden ist, die von den Datenbankabrufmitteln (12) abgerufen wird, und zwar nach Maßgabe der externen relationalen Information, die in der Speicheranordnung (16) für externe Relationen gespeichert ist;
Dateiformatbestimmungsmittel zur Ermittlung des Dateiformats der von den Dateibestimmungsmitteln ermittelten Datendatei; und
Programmbestimmungsmittel zur Ermittlung des wenigstens einen Programms von dem einen oder den mehreren Programmen nach Maßgabe des Dateiformats, welches von den Dateiformatbestimmungsmitteln ermittelt wurde, und den Dateiformatrelationen, die in der Speicheranordnung (16) für Dateiformatrelationen gespeichert sind.

6. Datenmanagementsystem nach Anspruch 5, bei dem
die Speicheranordnung (16) für externe Relationen weiterhin ein Dateiformat entsprechend jeder Datendatei speichert, und
die Dateiformatbestimmungsmittel das Dateiformat ermitteln, indem sie das Dateiformat entsprechend der Datendatei, die von den Dateibestimmungsmitteln ermittelt wurde, aus der Speicheranordnung (16) für externe Relationen abrufen.

7. Datenmanagementsystem nach einem der vorhergehenden Ansprüche, ferner umfassend:
Editiermittel für externe Relationen zum Hinzufügen einer neuen externen relationalen Information zu der Speicheranordnung (16) für externe Relationen, Modifizieren oder Löschen der externen relationalen Information, die in der Speicheranordnung (16) für externe Relationen gespeichert ist.

8. Datenmanagementsystem nach einem der vorhergehenden Ansprüche, ferner umfassend,
eine Benutzerschnittstellen-Anzeigeneinrichtung enthaltend,
einen Suchschlüsseleingabebereich (41) zur Eingabe eines Suchschlüssels;
einen Datenbankabrufangabebereich (42) zur Angabe des Abrufs der Dateneinheit von der ersten Datenbank (11) unter Verwendung des Suchschlüssels, der in den Suchschlüsseleingabebereich (41) eingegeben wurde, welcher von den Datenbankabrufmitteln (12) ausgeführt wird;
einen Abrufergebnisanzeigebereich (44) zur Anzeige des Inhalts der Dateneinheit, die von den Datenbankabrufmitteln abgerufen wurde; und
einen Programmaktivierungsangabebereich (43) zur Angabe des Befehls zur Aktivierung des Programrns, das mit der Dateneinheit verbunden ist, welche in dem Abrufergebnisanzeigebereich (44) angezeigt wird, welcher von den Benutzerbefehlempfangsmitteln (14) empfangen wird.

9. Datenmanagementsystem nach Anspruch 8, bei dem
der Programmaktivierungsangabebereich (43) die Angabe nur dann akzeptiert, wenn die externe relationale Information, die der von der ersten Datenbank (11) abgerufenen ersten Dateneinheit entspricht, existiert.

10. Datenmanagementverfahren zur Verwaltung einer ersten Datenbank (11), die eine Vielzahl erster Dateneinheiten, eine Vielzahl erster Datendateien, die alle außerhalb der ersten Datenbank (11) existieren, und eines oder mehrere außerhalb der ersten Datenbank (11) existierende Programme jeweils zur Verarbeitung wenigstens einer der Datendateien speichert, wobei das Verfahren umfaßt:
(a) vorhergehendes Registrieren wenigstens eines Elements externer relationaler Information, wobei jedes Element eine in der ersten Datenbank (11) gespeicherte erste Dateneinheit mit wenigstens einer der Datendateien und wenigstens einem des einen oder der mehreren Programme verbindet;
(b) Abrufen wenigstens einer der ersten Dateneinheiten aus der ersten Datenbank (11);
(c) Abrufen wenigstens eines Elements der externen relationalen Information; die im Schritt
(a) registriert wurde, wobei das abgerufene Element der im Schritt (b) abgerufenen ersten Dateneinheit entspricht;
(d) Empfangen des Befehls eines Benutzers zur Aktivierung eines Programms; und
(e) Bestimmen, als Antwort auf den in Schritt (d) empfangenen Befehl des Benutzers und das in Schritt (c) abgerufene Element externer relationaler Information, der wenigstens einen Datendatei und des wenigstens einen Programms, die mit der im Schritt (b) abgerufenen ersten Dateneinheit verbunden sind, und Aufrufen des wenigstens einen Programms zur Verarbeitung der wenigstens einen Datendatei.

11. Verfahren nach Anspruch 10, bei dem
jede der ersten Dateneinheiten einen Identifizierer zur Identifizierung der Dateneinheit, einen Datenkörper, der die Hauptdaten darstellt, und ein Schlüsselwort zum Abruf der ersten Dateneinheit enthält;
jede externe relationale Information in der Form einer zweiten Dateneinheit ist, welche einen Identifizierer zur Identifizierung der zweiten Dateneinheit, einen Dateinamen und einen Programmnamen als einen Datenkörper, und ein Schlüsselwort zum Abruf der zweiten Dateneinheit entsprechend dem Identifizierer der verbundenen ersten Dateneinheit enthält, die in der ersten Datenbank (11) gespeichert ist; und das Verfahren umfaßt:
(f) Empfangen eines ersten Suchschlüssels von einem Benutzer; Abrufen in Schritt (b) wenigstens einer ersten Dateneinheit, deren Schlüsselwort dem empfangenen ersten Suchschlüssel entspricht;
(g) Erzeugen eines zweiten Suchschlüssels nach Maßgabe des Identifizierers der im Schritt (b) abgerufenen ersten Dateneinheit;
Abrufen in Schritt (c) wenigstens einer zweiten Dateneinheit, deren Schlüsselwort dem zweiten Suchschlüssel entspricht; und
Aufrufen im Schritt (e) des Programms, das durch den Programmnamen identifiziert ist, der in der zweiten Dateneinheit enthalten ist, welche im Schritt (c) abgerufen wird, um die Datendatei zu verarbeiten, die durch den Dateinamen identifiziert ist, der in der im Schritt (c) abgerufenen zweiten Dateneinheit enthalten ist.

12. Verfahren nach Anspruch 10, ferner umfassend:
(f) vorheriges Registrieren wenigstens einer Dateiformatrelation, die ein Dateiformat mit einem Programm zur Verarbeitung einer durch dieses Dateiformat definierten Datendatei verbindet;
(g) Bestimmen des Dateiformats einer Datendatei, die durch im Schritt (c) abgerufene externe relationale Information gekennzeichnet ist;
(h) Abrufen der Dateiformatrelation nach Maßgabe des ermittelten Dateiformats; und
Aufrufen in Schritt (e) eines Programms, das von der Dateiformatrelation bezeichnet wird, die im Schritt (h) abgerufen wurde, um die Datendatei zu verarbeiten, deren Dateiformat im Schritt (g) ermittelt wurde.

## Revendications

1. Système de gestion de données comprenant :
une première base de données (11) pour stocker une multiplicité de premières unités de données;
une multiplicité de fichiers de données, chaque fichier de données existant à l'extérieur de la première base de données (11);
un ou plusieurs programmes, chacun d'eux étant destiné à traiter l'un au moins des fichiers de données et existant à l'extérieur de la première base de données (11);
un moyen de stockage de relations externes (16), établi séparément de la première base de données (11), pour stocker préalablement au moins un élément d'information relationnelle externe, chaque élément définissant une relation entre une première unité de données stockée dans la première base de données (11), et l'un au moins des fichiers de données et l'un au moins du ou des programmes;
un moyen d'extraction de base de données (12) pour extraire au moins une première unité de données de la première base de données (11);
un moyen pour extraire au moins un élément de l'information relationnelle externe stocké préalablement dans le moyen de stockage de relations externes, l'élément extrait correspondant à la première unité de données extraite précédemment par le moyen d'extraction de base de données;
un moyen de réception d'instruction d'utilisateur (14) pour recevoir une instruction d'un utilisateur pour activer un programme; et
un moyen de détermination de fichier et de programme (15) pour déterminer, en réponse à l'instruction de l'utilisateur reçue par le moyen de réception d'instruction d'utilisateur (14), et à l'élément d'information relationnelle externe concernant la première unité de données extraite, l'au moins un fichier de données et l'au moins un programme concernant la première unité de données extraite, et pour appeler l'au moins un programme pour traiter l'au moins un fichier de données.

2. Système de gestion de données, selon la revendication 1, dans lequel le moyen de stockage de relations externes (16) stocke l'information relationnelle externe sous la forme d'une table (16) qui comprend au moins un article ayant un identificateur correspondant à celui d'une première unité de données associée, au moins un nom de fichier de données et au moins un nom de programme, et le moyen de détermination de fichier et de programme (15) extrait du moyen de stockage de relations externes (16) au moins un article dont l'identificateur correspond à celui des premières données extraites, et détermine l'au moins un fichier de données et l'au moins un programme conformément au nom de fichier de données et au nom de programme inclus dans l'article extrait.

3. Système de gestion de données selon l'une quelconque des revendications précédentes, dans lequel :
le moyen de stockage de relations externes (16) comprend une base de données de relations externes (17) définie par la même structure de données que la première base de données (11), qui stocke au moins une seconde unité de données, et le système comprend en outre :
un moyen d'instruction d'extraction de relation externe (13) pour donner au moyen d'extraction de base de données (12) une instruction d'extraction pour extraire de la base de données de relations externes (17) au moins une seconde unité de données, et dans lequel
le moyen d'extraction de base de données (12) extrait en outre de la base de données de relations externes (17) l'au moins une seconde unité de données correspondant à la première unité de données extraite de la première base de données (11) en réponse à l'instruction d'extraction provenant du moyen d'instruction d'extraction de relation externe (13), et
le moyen de détermination de fichier et de programme (15) détermine l'au moins un fichier de données et l'au moins un programme conformément à la seconde unité de données extraite par le moyen d'extraction de base de données (12).

4. Un système de gestion de données selon la revendication 3, dans lequel chaque première unité de données comprend un identificateur qui identifie l'unité de données, un corps de données qui représente une donnée principale et un mot clé à utiliser pour extraire l'unité de données,
chaque seconde unité de données comprend un identificateur qui identifie la seconde unité de données, un corps de données qui représente au moins un nom de fichier de données et au moins un nom de programme, et un mot clé correspondant à l'identificateur de la première unité de données associée,
le moyen d'extraction de base de données (12) reçoit une première clé de recherche à partir d'un utilisateur, et extrait de la première base de données (11) la première unité de données dont le mot clé correspond à la première clé de recherche,
le moyen d'instruction d'extraction de relation externe (13) génère une seconde clé de recherche correspondant à l'identificateur de la première unité de données extraite, et il la donne au moyen d'extraction de base de données (12), à titre d'instruction d'extraction,
le moyen d'extraction de base de données (12) extrait en outre de la base de données de relations externes (17) au moins une seconde unité de données dont le mot clé correspond à la seconde clé de recherche, et
le moyen de détermination de fichier et de programme (15) détermine l'au moins un fichier de données et l'au moins un programme conformes au nom de fichier de données et au nom de programme inclus dans l'au moins une seconde unité de données extraite.

5. Système de gestion de données selon l'une quelconque des revendications précédentes, comprenant en outre :
un moyen de stockage de relations de format de fichier (16) pour stocker des relations de format de fichier qui lient un format de fichier à un programme pour traiter un fichier de données défini par le format de fichier; et dans lequel le moyen de détermination de fichier et de programme (15) comprend,
un moyen de détermination de fichier pour déterminer l'au moins un fichier de données qui est lié à l'unité de données extraite par le moyen d'extraction de base de données (12), conformément à l'information de relations externes stockée dans le moyen de stockage de relations externes (16) ;
un moyen de détermination de format de fichier pour déterminer le format de fichier du fichier déterminé par le moyen de détermination de fichier; et
un moyen de détermination de programme pour déterminer l'au moins un programme à partir du ou des programmes, conformément au format de fichier déterminé par le moyen de détermination de format de fichier et aux relations de format de fichier stockées dans le moyen de stockage de relations de format de fichier (16).

6. Système de gestion de données selon la revendication 5, dans lequel
le moyen de stockage de relations externes (16) stocke en outre un format de fichier correspondant à chaque fichier de données, et
le moyen de détermination de format de fichier détermine le format de fichier en extrayant le format de fichier correspondant au fichier de données déterminé par le moyen de détermination de fichier à partir du moyen de stockage de relations externes (16).

7. Système de gestion de données selon l'une quelconque des revendications précédentes, comprenant en outre :
un moyen d'édition de relations externes pour ajouter une nouvelle information de relations externes au moyen de stockage de relations externes (16), modifier ou éliminer l'information de relations externes stockée dans le moyen de stockage de relations externes (16).

8. Système de gestion de données selon l'une quelconque des revendications précédentes, comprenant en outre,
un moyen de visualisation d'interface d'utilisateur incluant,
une zone de saisie de clé de recherche (41) pour saisir une clé de recherche;
une zone d'indication d'extraction de base de données (42) pour indiquer l'extraction de l'unité de données à partir de la première base de données (11) en utilisant la clé de recherche saisie dans la zone de saisie de clé de recherche (41), qui est exécutée par le moyen d'extraction de base de données (12);
une zone de visualisation de résultat d'extraction (44) pour visualiser le contenu de l'unité de données extraite par le moyen d'extraction de base de données; et
une zone d'indication d'activation de programme (43) pour indiquer l'instruction d'activation du programme lié à l'unité de données visualisée dans la zone de visualisation de résultat d'extraction (44), qui est reçue par le moyen de réception d'instruction d'utilisateur (14).

9. Système de gestion de données selon la revendication 8, dans lequel
la zone d'indication d'activation de programme (43) accepte l'indication seulement si l'information de relations externes correspondant à la première unité de données extraite de la première base de données (11) existe.

10. Procédé de gestion de données pour gérer une première base de données (11) qui stocke une multiplicité de premières unités de données, une multiplicité de fichiers de données, chaque fichier de données existant à l'extérieur de la première base de données (11), et un ou plusieurs programmes, chaque programme étant destiné à traiter l'un au moins des fichiers de données et existant à l'extérieur de la première base de données (11), le procédé comprenant les étapes suivantes :
(a) on enregistre préalablement au moins un élément d'information relationnelle externe, chaque élément établissant une relation entre une première unité de données stockée dans la première base de données (11) et l'un au moins des fichiers de données et l'un au moins du ou des programmes;
(b) on extrait l'une au moins des premières unités de données de la première base de données (11);
(c) on extrait au moins un élément de l'information relationnelle externe enregistrée à l'étape (a), l'élément extrait correspondant à la première unité de données extraite à l'étape (b);
(d) on reçoit une instruction d'un utilisateur pour activer un programme; et
(e) on détermine, en réponse à l'instruction de l'utilisateur reçue à l'étape (d), et à l'élément d'information relationnelle externe extrait à l'étape (c), l'au moins un fichier de données et l'au moins un programme liés au premier élément de données extrait à l'étape (b), et on appelle l'au moins un programme pour traiter l'au moins un fichier de données.

11. Procédé selon la revendication 10, dans lequel
chacune des premières unités de données comprend un identificateur pour identifier l'unité de données, un corps de données qui représente des données principales et un mot clé pour extraire la première unité de données;
chaque information relationnelle externe est sous la forme d'une seconde unité de données qui comprend un identificateur pour identifier la seconde unité de données, un nom de fichier et un nom de programme en tant que corps de données, et un mot clé pour extraire la seconde unité de données correspondant à l'identificateur d'une première unité de données liée stockée dans la première base de données (11); et le procédé comprend les étapes suivantes :
(f) on reçoit une première clé de recherche provenant d'un utilisateur;
on extrait, à l'étape (b) au moins une première unité de données dont le mot clé correspond à la première clé de recherche reçue;
(g) on génère une seconde clé de recherche conformément à l'identificateur de la première unité de données extraite à l'étape (b);
on extrait à l'étape (c) au moins une seconde unité de données dont le mot clé correspond à la seconde clé de recherche; et
on appelle à l'étape (e) le programme identifié par le nom de programme inclus dans la seconde unité de données extraite à l'étape (c), pour traiter le fichier de données identifié par le nom de fichier inclus dans la seconde unité de données extraite à l'étape (c).

12. Procédé selon la revendication 10, comprenant en outre les étapes suivantes :
(f) on enregistre préalablement au moins une relation de format de fichier qui lie un format de fichier à un programme pour traiter un fichier de données défini par le format de fichier;
(g) on détermine le format de fichier d'un fichier de données désigné par l'information relationnelle externe extraite à l'étape (c) ;
(h) on extrait la relation de format de fichier conformément au format de fichier déterminé; et
on appelle à l'étape (e) un programme désigné par la relation de format de fichier extraite à l'étape (h), pour traiter le fichier de données dont le format de fichier est déterminé à l'étape (g).
